# EUROPÄISCHE PATENTANMELDUNG

(11) **EP 3 018 658 A1**
(43) Veröffentlichungstag der Anmeldung: **11.05.2016**
(21) Anmeldenummer: 14004267.2
(22) Anmeldetag: 17.12.2014
(51) Int. Cl.: G21D 1/00, B23K 26/38, B23K 35/38

(54) **Verfahren zum Laserschneiden von kontaminierten Werkstücken**

(30) Priorität: 05.11.2014 DE 102014016409
(71) Anmelder: Linde Aktiengesellschaft, 80331 München (DE)
(72) Erfinder: Jürgen, Scholz, 81379 München (DE)
(74) Vertreter: Gellner, Bernd

(57) **Zusammenfassung**

Die Erfindung betrifft ein Verfahren zum Laserschneiden von kontaminierten Werkstücken, wobei ein Schneidgas zugeführt wird, wobei ein Gasgemisch mit Sauerstoff und Stickstoff und/oder Kohlendioxid mit einem Sauerstoffgehalt zwischen 30% und 95%, insbesondere zwischen 30% und 90%, als Schneidgas zugeführt wird.

## Beschreibung

Die Erfindung betrifft ein Verfahren zum Laserschneiden von kontaminierten Werkstücken, wobei ein Schneidgas zugeführt wird, sowie ein Gasgemisch zum Laserschneiden von kontaminierten Werkstücken.

### Stand der Technik

Beispielsweise in Atomkraftwerken bzw. Nuklearanlagen kann es gefordert sein, kontaminierte Werkstücke zu zerlegen bzw. zu trennen. Zu diesem Zweck eignet sich beispielsweise das Verfahren des Laserschneidens zum Trennen solcher kontaminierter Werkstücke.

Bei einem derartigen Laserschneiden von kontaminierten Werkstücken gilt es beispielsweise zu beachten, dass aus einer entsprechenden Schnittfuge bzw. einem entsprechenden Schnittspalt ausgetriebenes Material, beispielsweise in Form von Staub, Spritzern oder Spänen, gesammelt und fachgerecht entsorgt wird. Gegebenenfalls kann das Laserschneiden von kontaminierten Werkstücken dabei mit hohem finanziellem und technischem Aufwand verbunden sein.

Es ist wünschenswert, das Laserschneiden von kontaminierten Werkstücken zu verbessern und ein einfaches, effektives und kostengünstiges Trennen von kontaminierten Werkstücken zu ermöglichen.

### Offenbarung der Erfindung

Diese Aufgabe wird durch ein Verfahren zum Laserschneiden von kontaminierten Werkstücken sowie ein Gasgemisch zum Laserschneiden von kontaminierten Werkstücken mit den Merkmalen der unabhängigen Patentansprüche gelöst. Vorteilhafte Ausgestaltungen sind Gegenstand der jeweiligen Unteransprüche sowie der nachfolgenden Beschreibung. Ausgestaltungen des erfindungsgemäßen Verfahrens und des erfindungsgemäßen Gasgemischs ergeben sich aus der nachfolgenden Beschreibung in jeweils analoger Art und Weise.

Beim Laserschneiden von kontaminierten Werkstücken wird ein Schneidgas zugeführt. Erfindungsgemäß wird ein Gasgemisch mit Sauerstoff und Stickstoff und/oder Kohlendioxid mit einem Sauerstoffgehalt zwischen 30% und 95%, insbesondere zwischen 30% und 90%, als Schneidgas zugeführt. Im Gasgemisch sind folglich Sauerstoff und Stickstoff, Sauerstoff und Kohlendioxid oder Sauerstoff, Stickstoff und Kohlendioxid enthalten.

Unter kontaminierten Werkstücken sind in diesem Zusammenhang insbesondere Stoffe, Bauteile bzw. Bestandteile von Anlagen zu verstehen, die mit radioaktiven Stoffen bzw. mit Radioaktivität verunreinigt sind.

Ein Laserstrahl wird auf das zu schneidende kontaminierte Werkstück fokussiert, insbesondere durch zweckmäßige optische Elemente (Fokussieroptik) wie Spiegel, Linsen und/oder Fasern, z.B. Glasfasern. Zur Erzeugung des Laserstrahls wird insbesondere ein Gas- oder Festkörperlaser (beispielsweise ein Nd:YAG-Laser, ein Kohlendioxidlaser, ein Diodenlaser oder ein Faserlaser) verwendet. Insbesondere wird ein Laserstrahl mit einer Wellenlänge zwischen 300 nm und 1 500 nm verwendet.

Durch den fokussierten Laserstrahl wird an der fokussierten Stelle Energie in das kontaminierte Werkstück eingebracht, das kontaminierte Werkstück wird in der Umgebung der fokussierten Stelle erhitzt. Je nach zugeführtem Schneidgas wird das kontaminierte Werkstück dadurch verbrannt oder aufgeschmolzen. An dieser fokussierten Stelle entsteht in dem kontaminierten Werkstück somit eine Schmelze bzw. Schlacke und weiterhin eine Schnittfuge bzw. ein Schnittspalt.

Durch Zufuhr des erfindungsgemäßen Gasgemischs wird insbesondere eine Mischung aus Laserschmelzschneiden und Laserbrennschneiden durchgeführt. Insbesondere durch den Sauerstoff in dem Gasgemisch verbrennt ein bestimmter Materialanteil des kontaminierten Werkstücks und oxidiert, insbesondere ein eisenhaltiges Material. Durch Stickstoff in dem Gasgemisch wird insbesondere ein anderer Materialanteil des kontaminierten Werkstücks aufgeschmolzen.

Das Schneidgas wird insbesondere koaxial bzw. konzentrisch zu dem Laserstrahl zugeführt. Um den Laserstrahl herum ist insbesondere eine Schneidgasdüse angeordnet. Der fokussierte Laserstrahl und das Schneidgas treten insbesondere konzentrisch aus der Schneidgasdüse aus.

Durch das zugeführte Schneidgas wird Material aus der Schnittfuge ausgetrieben bzw. herausgeblasen. Weiterhin werden durch das Schneidgas insbesondere die optischen Elemente der Fokussieroptik geschützt.

Im Rahmen der Erfindung wurde ein spezielles Gasgemisch als Schneidgas für das Laserschneiden von kontaminierten Werkstücken gefunden, welches erhebliche Vorteile und Verbesserungen gegenüber herkömmlichem Laserschneiden bringt.

### Vorteile der Erfindung

Der Erfindung liegt die Erkenntnis zu Grunde, dass sich beim Laserschneiden von kontaminierten Werkstücken erhebliche Vorteile ergeben, wenn ein Schnittspalt mit möglichst viel Trennrückständen erzeugt wird, insbesondere in Form von Grat und/oder Schlacke. Durch Zufuhr des erfindungsgemäßen Gasgemischs als Schneidgas wird insbesondere ein Schnittspalt mit vergleichsweise viel Trennrückständen erzeugt. Aus dem Schnittspalt ausgetriebenes Material wird nicht unkontrolliert, z.B. in Form von Staub, Spritzern oder Spänen, von dem kontaminierten Werkstück entfernt, sondern sammelt sich als Trennrückstände an dem kontaminierten Werkstück, insbesondere an einer Unterseite des kontaminierten Werkstücks.

Beim herkömmlichen Laserschneiden von nicht-kontaminierten Werkstücken wird es zumeist angestrebt, einen sehr schmalen Schnittspalt zu erzeugen, wobei möglichst wenig Trennrückstände an dem nicht-kontaminierten Werkstück erzeugt werden. Entsprechend wird beim herkömmlichen Laserschneiden ein Schneidgas gewählt, mit welchem Material sehr gut aus dem Schnittspalt ausgetrieben werden kann. Dieses ausgetriebene Material wird dabei zumeist unkontrolliert von dem Werkstück entfernt, beispielsweise in Form von Staub, Spritzern oder Spänen.

Beim Laserschneiden von kontaminierten Werkstücken ist ein derartiges unkontrolliertes Entfernen von Material aus dem Schnittspalt jedoch ungewollt und mit erheblichen Kosten und Aufwand verbunden, da dieses ausgetriebene Material gesammelt und fachgerecht entsorgt werden muss. Durch die Erfindung wird aufwendiges und kostenintensives Aufsammeln des ausgetriebenen Materials verhindert bzw. zumindest eingeschränkt. Durch die Erfindung wird ein einfaches, effektives und kostengünstiges Trennen von kontaminierten Werkstücken ermöglicht. Kosten- und Zeitersparnis werden erzielt, Spritzer-, Staub- und Spanbildung werden erheblich reduziert. Somit werden gesundheitliche Gefahren für Mitarbeiter sowie Gefahren und Belastungen für die Umwelt verringert.

Im Rahmen der Erfindung wurde erkannt, dass bei dem Gasgemisch mit Sauerstoff und weiterhin mit Stickstoff und/oder Kohlendioxid mit einem Sauerstoffgehalt über 30% die Grat- bzw. Schlackenbildung zunimmt und die Spritzer-, Staub- und Spanbildung abnimmt. Bei einem Sauerstoffgehalt von insbesondere über 90% nimmt die Grat- bzw. Schlackenbildung wieder ab. Bei einem Sauerstoffgehalt von insbesondere über 95% ist die Grat- bzw. Schlackenbildung kaum noch ausgeprägt.

Vorteilhafterweise wird das Gasgemisch aus Sauerstoff und Stickstoff und/oder Kohlendioxid mit einem Sauerstoffgehalt zwischen 50% und 70% als Schneidgas zugeführt. Bei einem derartigen Sauerstoffgehalt wird eine besonders ausgeprägte Grat- bzw. Schlackenbildung erzeugt.

Vorzugsweise werden durch das Laserschneiden an dem kontaminierten Werkstück entstehende Trennrückstände, insbesondere Grat und/oder Schlacke, von dem kontaminierten Werkstück entfernt. Weiter insbesondere werden die entfernten Trennrückstände fachgerecht entsorgt. Die an dem kontaminierten Werkstück anhaftenden Trennrückstände können einfach, aufwandsarm und kostengünstig von dem kontaminierten Werkstück entfernt werden.

Bevorzugt werden Bestandteile von Nuklearanlagen und/oder Atomkraftwerken durch das Laserschneiden als kontaminierte Werkstücke bearbeitet. Beispielsweise werden Rohre, Leitungen, Gehäuse, Behälter, usw. als derartige Bestandteile bearbeitet. Die Bestandteile können beispielsweise in der Nuklearanlage bzw. dem Atomkraftwerk selbst mittels des Laserschneiden bearbeitet werden oder auch außerhalb des Nuklearanlage bzw. dem Atomkraftwerk, beispielsweise in speziellen gegen Radioaktivität abgeschirmten Bearbeitungsräumen.

Die Erfindung eignet sich insbesondere zum Rückbau von Nuklearanlagen bzw. Atomkraftwerken. Vorteilhafterweise werden Bestandteile der Nuklearanlage bzw. des Atomkraftwerks im Zuge des Rückbaus der Nuklearanlage bzw. des Atomkraftwerks bearbeitet. Im Zuge dieses Rückbaus werden die Bestandteile zerlegt und insbesondere in vergleichsweise kleine, handliche Teile getrennt.

## Patentansprüche

1. Verfahren zum Laserschneiden von kontaminierten Werkstücken, wobei ein Schneidgas zugeführt wird,
**dadurch gekennzeichnet, dass**
ein Gasgemisch mit Sauerstoff und Stickstoff und/oder Kohlendioxid mit einem Sauerstoffgehalt zwischen 30% und 95%, insbesondere zwischen 30% und 90%, als Schneidgas zugeführt wird.

2. Verfahren nach Anspruch 1, wobei das Gasgemisch mit einem Sauerstoffgehalt zwischen 50% und 70% als Schneidgas zugeführt wird.

3. Verfahren nach Anspruch 1 oder 2, wobei durch das Laserschneiden an dem kontaminierten Werkstück entstehende Trennrückstände von dem kontaminierten Werkstück entfernt werden.

4. Verfahren nach einem der vorstehenden Ansprüche, wobei Bestandteile von Nuklearanlagen und/oder Atomkraftwerken durch das Laserschneiden als kontaminierte Werkstücke bearbeitet werden.

5. Verfahren nach Anspruch 4, wobei die Bestandteile im Zuge eines Rückbaus der Nuklearanlage und/oder des Atomkraftwerks bearbeitet werden.

6. Gasgemisch zum Laserschneiden von kontaminierten Werkstücken,
**dadurch gekennzeichnet, dass**
das Gasgemisch Sauerstoff und Stickstoff und/oder Kohlendioxid mit einem Sauerstoffgehalt zwischen 30% und 95%, insbesondere zwischen 30% und 90% umfasst.

7. Gasgemisch nach Anspruch 6, mit einem Sauerstoffgehalt zwischen 50% und 70%.
